(19) Europäisches Patentamt
European Patent Office
Office européen des brevets

(11) **EP 4 489 134 A1**

(12) **EUROPEAN PATENT APPLICATION**
published in accordance with Art. 153(4) EPC

(43) Date of publication:
**08.01.2025 Bulletin 2025/02**

(21) Application number: **22933938.7**

(22) Date of filing: **28.03.2022**

(51) International Patent Classification (IPC):
$H01M\ 4/587^{(2010.01)}$   $H01M\ 10/0525^{(2010.01)}$
$H01M\ 10/058^{(2010.01)}$

(52) Cooperative Patent Classification (CPC):
**H01M 4/587; H01M 10/0525; H01M 10/058;**
**Y02E 60/10**

(86) International application number:
**PCT/CN2022/083355**

(87) International publication number:
**WO 2023/184080 (05.10.2023 Gazette 2023/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
• **FENG, Pengyang**
 **Ningde, Fujian 352100 (CN)**
• **TANG, Jia**
 **Ningde, Fujian 352100 (CN)**

(74) Representative: **Klunker IP**
**Patentanwälte PartG mbB**
**Destouchesstraße 68**
**80796 München (DE)**

(54) **ELECTROCHEMICAL APPARATUS AND ELECTRONIC APPARATUS**

(57) An electrochemical device is provided. The electrochemical device includes a negative electrode. The negative electrode includes a negative current collector and a negative active material layer. The negative active material layer includes a negative active material. The negative active material layer satisfies $0.1 \leq S_A/S_{002} \leq 0.3$, where $S_A$ is a peak area value of an A peak corresponding to a diffraction angle $2\theta$ of 42.4° to 43.6° in an XRD pattern of the negative active material layer, and $S_{002}$ is a peak area value of a 002 peak in the XRD pattern of the negative active material layer. The electrochemical device of this application achieves excellent cycle performance and kinetic performance in addition to a high gravimetric capacity. This application further provides an electronic device containing the electrochemical device.

EP 4 489 134 A1

**Description**

**TECHNICAL FIELD**

This application relates to the field of energy storage, and in particular, to an electrochemical device and an electronic device.

**BACKGROUND**

Electrochemical devices such as lithium-ion batteries have dominated the market by virtue of their superior advantages such as a high energy density, high safety, no memory effect, and a long service life. With popularization of consumer electronics products such as a notebook computer, a mobile phone, a tablet computer, a mobile power supply, and an unmanned aerial vehicle, requirements on an electrochemical device contained in such products are increasingly higher. For example, the battery not only needs to be lightweight and portable, but also needs to have a high capacity and a long service life.

In a lithium-ion battery, for example, natural graphite of a relatively high gravimetric capacity is typically used as a negative electrode material. However, the large-flake porous structure of the natural graphite makes it difficult to achieve excellent cycle performance and kinetic performance concurrently, thereby restricting the application of the natural graphite in high-performance electrochemical devices.

**SUMMARY**

In view of the disadvantages in the prior art, this application provides an electrochemical device and an electronic device containing the electrochemical device. The electrochemical device of this application achieves excellent cycle performance and kinetic performance in addition to a high gravimetric capacity.

According to a first aspect, this application provides an electrochemical device. The electrochemical device includes a negative electrode. The negative electrode includes a negative current collector and a negative active material layer. The negative active material layer includes a negative active material. The negative active material layer satisfies $0.1 \leq S_A/S_{002} \leq 0.3$, where $S_A$ is a peak area value of an A peak corresponding to a diffraction angle $2\theta$ of 42.4° to 43.6° in an XRD pattern of the negative active material layer, and $S_{002}$ is a peak area value of a 002 peak in the XRD pattern of the negative active material layer. The peak area value $S_A$ of the A peak of the negative active material layer is negatively correlated with the thickness of the active material layer. The greater $S_A$, the smaller the thickness of the negative active material layer, and the easier it is for active metal ions such as lithium ions to be intercalated in and deintercalated from the negative active material layer, but the lower the energy density of the electrochemical device. The peak area value $S_{002}$ of the 002 peak of the negative active material layer is correlated with the amount of intercalatable active metal ions such as lithium ions in the negative active material. The higher the $S_{002}$, the larger the amount of the intercalatable active metal ions, thereby being conducive to improving the energy density of the electrochemical device. However, the deformation of the electrochemical device will increase when the value of $S_{002}$ is unduly high. The applicant hereof have found, after extensive research, that when $S_A/S_{002}$ is controlled to fall within the above range, a high energy density of the electrochemical device can be ensured, the normal deintercalation of the active metal ions from the active material is ensured, and the electrochemical device achieves excellent cycle performance and kinetic performance in addition to a high gravimetric capacity.

According to some embodiments of this application, $7000 \leq S_A \leq 9000$. According to some embodiments of this application, $25000 \leq S_{002} \leq 90000$. In this application, the value of $S_A$ is the peak area value of the A peak in the XRD pattern of the negative active material layer when the electrochemical device is in a fully discharged state. The value of $S_{002}$ is the peak area value of the 002 peak in the XRD pattern of the negative active material layer when the electrochemical device is in a fully discharged state.

According to some embodiments of this application, a full-width-at-half-maximum of the A peak is 0.1° to 0.5°. The full-width-at-half maximum of the A peak reflects the thickness of the active material layer. The narrower the full-width-at-half-maximum, the smaller the thickness of the active material layer, and the more favorable it is for intercalating the active metal ions into the active material layer, thereby enhancing the kinetic performance of the electrochemical device.

According to some embodiments of this application, in the XRD pattern of the negative active material layer, a 101 peak is exhibited corresponding to the diffraction angle $2\theta$ of 43.6° to 46.6°, satisfying: $0.015 \leq S_{101}/S_{002} \leq 0.035$, where $S_{101}$ is a peak area value of the 101 peak.

According to some embodiments of this application, a full-width-at-half-maximum of the 101 peak is 0.3° to 0.8°. The 101 peak correlates with the amount of intercalatable active metal ions of the active material. The higher the peak intensity of the 101 peak, the narrower the full-width-at-half maximum, and the larger the amount of intercalatable active metal ions. Therefore, controlling the peak intensity and full-width-at-half-maximum of the 101 peak to fall within the specified range is favorable for obtaining a negative active material containing a large amount of intercalatable active metal ions, and increasing the gravimetric capacity of the active material.

According to some embodiments of this application, the negative current collector is a copper foil.

According to some embodiments of this application, the negative current collector includes chromium. Based on a mass of the negative current collector, a content of the chromium is 0.008% to 0.020%. According to some embodiments of this application, the negative current collector includes niobium. Based on a mass of the negative current collector, a content of the niobium is 0.005% to 0.009%. According to some embodiments of this application, the negative current collector includes sulfur. Based on a mass of the negative current collector, a content of the sulfur is 0.001% to 0.006%. Controlling the content of trace elements in the current collector facilitates elongation of the negative active material in deintercalating the active metal ions, thereby suppressing the deformation of the electrochemical device and enhancing the kinetic performance and cycle performance of the electrochemical device.

According to some embodiments of this application, a thickness of the negative active material layer is H $\mu$m, where $87 \leq S_A/H \leq 300$. In some embodiments, a thickness of the negative active material layer is H $\mu$m. A mass of the negative active material layer per unit area is C g/cm$^2$, satisfying: $0.003 \leq C \leq 0.01$, and $1.0 \leq 10^4 \times C/H \leq 1.7$. $S_A$ is inversely proportional to the thickness of the active material. Generally, the smaller the thickness H of the active material layer, the larger the SA. This accelerates the speed of intercalating active metal ions in terms of electrical properties, and lithium is not prone to precipitate. However, if the thickness of the active material layer is unduly small, with the same mass of the active material layer (the same C g/cm$^2$), the greater the pressure exerted on the electrode plate, the more difficult it is to intercalate the active metal ions into the active material layer, and the higher the internal resistance of the electrochemical device. Therefore, controlling the thickness of the active material layer and the mass of the negative active material layer per unit area to fall within the above range is favorable for controlling the intercalation and deintercalation speeds of the active metal ions, increases the gravimetric capacity of the negative active material, and enhances the cycle performance and kinetic performance of the electrochemical device.

According to some embodiments of this application, the negative active material layer satisfies $10 \leq S_{004}/S_{110} \leq 25$. $S_{004}$ is a peak area value of a 004 peak in the XRD pattern of the negative active material layer, and $S_{110}$ is a peak area value of a 110 peak in the XRD pattern of the negative active material layer. When the $S_{004}/S_{110}$ ratio falls within the above range, the internal resistance for intercalation/deintercalation of the active metal ions in the negative active material is relatively low, and the precipitation of active metal ions is reduced, thereby enhancing the cycle performance and kinetic performance of the electrochemical device.

According to some embodiments of this application, the negative active material includes natural graphite. In some embodiments, a specific surface area (BET) of the negative active material is 2 g/cm$^2$ to 5 g/cm$^2$. In some embodiments, a gravimetric capacity of the negative active material is 360 mAh/g to 370 mAh/g.

In some embodiments, a particle diameter of the negative active material satisfies $1 \mu m \leq Dv_{10} \leq 10 \mu m$, $3 \mu m \leq Dv_{50} \leq 18 \mu m$, and $8 \mu m \leq Dv_{90} < 35 \mu m$. When the particle size distribution of the negative active material falls within the above range, it is ensured that the internal resistance for intercalation/deintercalation of the active metal ions in the negative active material is relatively low, thereby reducing the precipitation of active metal ions and side reactions between the active metal ions and the electrolyte solution, and ensuring relatively high cycle performance and kinetic performance of the electrochemical device.

According to a second aspect, this application provides an electronic device. The electronic device includes the electrochemical device according to the first aspect of this application.

The negative electrode of the electrochemical device provided in this application includes a specified negative active material layer, so that the electrochemical device achieves excellent cycle performance and kinetic performance in addition to a high capacity.

## DETAILED DESCRIPTION

The following describes this application in more detail with reference to specific embodiments. Understandably, the specific embodiments are merely intended to illustrate this application but not intended to limit the scope of this application.

## I. Electrochemical device

According to a first aspect, this application provides an electrochemical device. The electrochemical device includes a negative electrode. The negative electrode includes a negative current collector and a negative active material layer. The negative active material layer includes a negative active material. The negative active material layer satisfies $0.1 \leq S_A/S_{002} \leq 0.3$, where $S_A$ is a peak area value of an A peak corresponding to a diffraction angle $2\theta$ of $42.4°$ to $43.6°$ in an XRD pattern of the negative active material layer, and $S_{002}$ is a peak area value of a 002 peak in the XRD pattern of the negative active material layer.

In this application, in the XRD pattern of the negative active material layer, a characteristic peak exhibited corresponding to the diffraction angle $2\theta$ of 25.0° to 27.0° is a 002 peak.

In some embodiments, the $S_A/S_{002}$ ratio is 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, or a value falling within a range formed by any two thereof. The peak area value $S_A$ of the A peak of the negative active material layer is negatively correlated with the thickness of the active material layer. The greater $S_A$, the smaller the thickness of the negative active material layer, and the easier it is for active metal ions to be intercalated in and deintercalated from the negative active material layer, but the lower the energy density of the electrochemical device. The peak area value $S_{002}$ of the 002 peak of the negative active material layer is correlated with the amount of intercalatable active metal ions such as lithium ions in the negative active material. The higher the $S_{002}$, the larger the amount of the intercalatable active metal ions, and the higher the gravimetric capacity of the negative active material, thereby being conducive to improving the energy density of the electrochemical device. However, when the value of $S_{002}$ is unduly high, the deformation rate of the electrochemical device increases, and the kinetic performance of the electrochemical device is impaired. The applicant hereof have found, after extensive research, that when $S_A/S_{002}$ is controlled to fall within the above range, a high energy density of the electrochemical device can be ensured, the normal deintercalation of the active metal ions from the active material is ensured, and the electrochemical device achieves excellent cycle performance and kinetic performance in addition to a high gravimetric capacity.

According to some embodiments of this application, $7000 \le S_A \le 9000$. In some embodiments, $S_A$ is 7100, 7300, 7500, 7700, 7900, 8000, 8100, 8300, 8500, 8700, 8900, or a value falling within a range formed by any two thereof. According to some embodiments of this application, $25000 \le S_{002} \le 90000$. In some embodiments, $S_{002}$ is 27000, 30000, 34000, 40000, 45000, 50000, 55000, 60000, 65000, 70000, 75000, 80000, 85000, or a value falling within a range formed by any two thereof. In this application, the value of $S_A$ is the peak area value of the A peak in the XRD pattern of the negative active material layer when the electrochemical device is in a fully discharged state. The value of $S_{002}$ is the peak area value of the 002 peak in the XRD pattern of the negative active material layer when the electrochemical device is in a fully discharged state.

According to some embodiments of this application, a full-width-at-half-maximum of the A peak is 0.1° to 0.5°. In some embodiments, the full-width-at-half-maximum of the A peak is 0.15°, 0.17°, 0.2°, 0.23°, 0.25°, 0.27°, 0.3°, 0.33°, 0.35°, 0.37°, 0.4°, 0.43°, 0.45°, 0.47°, or a value falling within a range formed by any two thereof. The full-width-at-half-maximum of the A peak reflects the thickness of the active material layer. The narrower the full-width-at-half maximum, the smaller the thickness of the active material layer, and the more favorable it is for intercalating the active metal ions into the active material layer, thereby enhancing the kinetic performance and cycle performance of the electrochemical device.

According to some embodiments of this application, in the XRD pattern of the negative active material layer, a 101 peak is exhibited corresponding to the diffraction angle $2\theta$ of 43.6° to 46.6°, satisfying: $0.015 \le S_{101}/S_{002} \le 0.035$, where $S_{101}$ is a peak area value of the 101 peak. In some embodiments, the $S_{101}/S_{002}$ ratio is 0.017, 0.019, 0.02, 0.021, 0.023, 0.025, 0.027, 0.029, 0.030, 0.031, 0.033, or a value falling within a range formed by any two thereof.

According to some embodiments of this application, a full-width-at-half-maximum of the 101 peak is 0.3° to 0.8°. In some embodiments, the full-width-at-half-maximum of the 101 peak is 0.35°, 0.37°, 0.4°, 0.43°, 0.45°, 0.47°, 0.5°, 0.53°, 0.55°, 0.57°, 0.6°, 0.63°, 0.65°, 0.67°, 0.7°, 0.73°, 0.75°, 0.77°, or a value falling within a range formed by any two thereof. The 7101 peak correlates with the amount of intercalatable active metal ions of the active material. The higher the peak intensity of the 101 peak, the narrower the full-width-at-half maximum, and the larger the amount of intercalatable active metal ions. Therefore, controlling the peak intensity and full-width-at-half-maximum of the 101 peak to fall within the specified range is favorable for obtaining a negative active material containing a large amount of intercalatable active metal ions, and increasing the gravimetric capacity of the negative active material.

According to some embodiments of this application, the negative current collector is a copper foil.

According to some embodiments of this application, the negative current collector includes chromium. Based on a mass of the negative current collector, a content of the chromium is 0.008% to 0.020%, for example, is 0.009%, 0.01%, 0.011%, 0.012%, 0.012%, 0.014%, 0.015%, 0.016%, 0.017%, 0.018%, 0.019%, or a value falling within a range formed by any two thereof. According to some embodiments of this application, the negative current collector includes niobium. Based on the mass of the negative current collector, a content of the niobium is 0.005% to 0.009%, for example, is 0.0055%, 0.06%, 0.065%, 0.07%, 0.075%, 0.08%, 0.085%, or a value falling within a range formed by any two thereof. According to some embodiments of this application, the negative current collector includes sulfur. Based on the mass of the negative current collector, a content of the sulfur is 0.001% to 0.006%, for example, is 0.0015%, 0.02%, 0.0025%, 0.003%, 0.0035%, 0.004%, 0.0045%, 0.005%, 0.0055%, or a value falling within a range formed by any two thereof. Controlling the content of trace elements in the current collector facilitates elongation of the negative active material in deintercalating lithium, thereby suppressing the deformation of the electrochemical device and enhancing the kinetic performance and cycle performance of the electrochemical device.

According to some embodiments of this application, a thickness of the negative active material layer is H $\mu$m, where $87 \le S_A/H \le 300$. In some embodiments, a thickness of the negative active material layer is H $\mu$m. A mass of the negative active material layer per unit area is C g/cm$^2$, satisfying: $0.003 \le C \le 0.01$, and $1.0 \le 10^4 \times C/H \le 1.7$. $S_A$ is inversely proportional to the thickness of the active material. Generally, the smaller the thickness H of the active material layer, the larger the SA. This accelerates the speed of intercalating or deintercalating active metal ions in terms of electrical properties, and the active metal ions are not prone to precipitate. However, if the thickness of the active material layer is unduly small, with the same mass of the active material layer (the same C $g/cm^2$), the greater the pressure exerted on the electrode plate, the more difficult it is to intercalate the active metal ions such lithium ions into the active material layer, and the higher the internal resistance of intercalation. Therefore, controlling the thickness of the active material layer and the mass of the negative active material layer per unit area to fall within the above range is favorable for controlling the intercalation and deintercalation speeds of the active metal ions, increases the gravimetric capacity of the negative active material, and enhances the kinetic performance and cycle performance of the electrochemical device.

According to some embodiments of this application, the negative active material layer satisfies $10 \leq S_{004}/S_{110} \leq 25$. $S_{004}$ is a peak area value of a 004 peak in the XRD pattern of the negative active material layer, and $S_{110}$ is a peak area value of a 110 peak in the XRD pattern of the negative active material layer. In some embodiments, the $S_{004}/S_{110}$ ratio is 11, 12, 13, 14, 15, 16, 17, 18, 19, 20, 21, 22, 23, 24, or a value falling within a range formed by any two thereof. The $S_{004}/S_{110}$ ratio correlates with the particle diameter of the negative active material. When the particle diameter of the negative active material decreases, the $S_{004}/S_{110}$ ratio decreases accordingly. In this case, the internal resistance for intercalation/deintercalation of the active metal ions in the negative active material is relatively low, and the precipitation of active metal ions is reduced, thereby reducing the internal resistance of the electrochemical device and improving the capacity retention rate of the electrochemical device charged or discharged at a high C-rate. When the $S_{004}/S_{110}$ ratio satisfies the above range, the internal resistance of the electrochemical device is relatively low, the capacity retention rate of the electrochemical device charged or discharged at a high C-rate is relatively high, and the kinetic performance and cycle performance of the electrochemical device are relatively high.

According to some embodiments of this application, the negative active material includes natural graphite. In some embodiments, the specific surface area (BET) of the negative active material is 2 $g/cm^2$ to 5 $g/cm^2$, for example, is 2 $g/cm^2$, 2.5 $g/cm^2$, 3 $g/cm^2$, 3.5 $g/cm^2$, 4 $g/cm^2$, 4.5 $g/cm^2$, or a value falling within a range formed by any two thereof. In some embodiments, a gravimetric capacity of the negative active material is 360 mAh/g to 370 mAh/g.

In some embodiments, a particle diameter of the negative active material satisfies $1 \mu m \leq Dv_{10} \leq 10 \mu m$, $3 \mu m \leq D_{V50} \leq 18 \mu m$, and $8 \mu m \leq Dv_{90} \leq 35 \mu m$. In this application, $Dv_{10}$ means a diameter value than which 10% of the particles of the negative active material are smaller in a volume-based particle size distribution. $D_{V50}$ means a diameter value than which 50% of the particles of the negative active material are smaller in a volume-based particle size distribution. $Dv_{90}$ means a diameter value than which 90% of the particles of the negative active material are smaller in a volume-based particle size distribution.

In some embodiments, $Dv_{10}$ is 2 $\mu m$, 3 $\mu m$, 4 $\mu m$, 5 $\mu m$, 6 $\mu m$, 7 $\mu m$, 8 $\mu m$, 9 $\mu m$, or a value falling within a range formed by any two thereof. In some embodiments, $D_{V50}$ is 4 $\mu m$, 5 $\mu m$, 6 $\mu m$, 7 $\mu m$, 8 $\mu m$, 9 $\mu m$, 10 $\mu m$, 11 $\mu m$, 12 $\mu m$, 13 $\mu m$, 14 $\mu m$, 15 $\mu m$, 16 $\mu m$, 17 $\mu m$, or a value falling within a range formed by any two thereof. In some embodiments, $Dv_{90}$ is 10 $\mu m$, 12 $\mu m$, 14 $\mu m$, 16 $\mu m$, 18 $\mu m$, 20 $\mu m$, 22 $\mu m$, 24 $\mu m$, 26 $\mu m$, 28 $\mu m$, 30 $\mu m$, 32 $\mu m$, 34 $\mu m$, or a value falling within a range formed by any two thereof. When the particle diameter of the negative active material decreases, the $S_{004}/S_{110}$ ratio decreases accordingly. In this case, the internal resistance for intercalation/deintercalation of the active metal ions in the negative active material is relatively low, and the precipitation of active metal ions is reduced, thereby reducing the internal resistance of the electrochemical device and improving the capacity retention rate of the electrochemical device charged or discharged at a high C-rate. However, when the particle diameter of the negative active material is unduly small, the specific surface area of the negative active material is unduly large, and the contact area between the negative active material and the electrolyte solution increases, thereby being prone to trigger side reactions between the negative active material and the electrolyte solution, and reducing the first-cycle Coulombic efficiency of the electrochemical device in initially deintercalating the active metal ions. Therefore, the particle diameter of the negative active material needs to be controlled to fall within a specified range to ensure good performance of the electrochemical device.

The electrochemical device of this application further includes a positive electrode. The positive electrode includes a positive current collector and a positive active material layer. The positive active material layer includes a positive active material, a binder, and a conductive agent.

According to some embodiments of this application, the positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

According to some embodiments of this application, the positive active material includes at least one of lithium cobalt oxide, lithium nickel cobalt manganese oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder includes a binder polymer, such as at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binders include at least one of polyethylene, polypropylene, polyvinyl ester, polyvinyl alcohol, or polyacrylic acid. In some embodiments, the conductive agent includes a carbon-based material such as natural graphite, artificial graphite, carbon black, acetylene black, Ketjen black, or carbon fiber; a metal-based material such as metal powder or metal fiber containing copper, nickel, aluminum, silver, or the like; a conductive polymer such as a polyphenylene derivative; or any mixture thereof.

The electrochemical device according to this application further includes a separator. The material and the shape of the separator for use in the electrochemical device according to this application are not particularly limited, and may be based on any technology disclosed in the prior art. In some embodiments, the separator includes a polymer or an inorganic compound or the like formed from a material that is stable to the electrolyte solution disclosed in this application.

For example, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

The electrochemical device of this application further includes an electrolyte solution. The electrolyte solution applicable to this application may be an electrolyte solution known in the prior art.

According to some embodiments of this application, the electrolyte solution includes an organic solvent, a lithium salt, and optionally an additive. The organic solvent in the electrolyte solution of this application may be any organic solvent known in the prior art suitable for use as a solvent of the electrolyte solution. An electrolyte used in the electrolyte solution according to this application is not limited, and may be any electrolyte known in the prior art. The additive in the electrolyte solution according to this application may be any additive known in the prior art suitable for use as an additive in the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalate)borate $LiBF_2(C_2O_4)$ (LiDFOB). In some embodiments, the additive includes at least one of fluoroethylene carbonate or adiponitrile.

According to some embodiments of this application, the electrochemical device of this application includes, but is not limited to: a lithium-ion battery or a sodium-ion battery. In some embodiments, the electrochemical device is a lithium-ion battery.

## II. Electronic device

This application further provides an electronic device, including the electrochemical device according to the first aspect of this application.

The electronic device or apparatus according to this application is not particularly limited. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Unless otherwise expressly specified, reagents, materials, and instruments used in the following embodiments and comparative embodiments are all commercially available.

**Embodiments and Comparative Embodiments**

**Preparing a positive electrode**

Mixing lithium cobalt oxide (molecular formula: $LiCoO_2$) as a positive active material, acetylene black as a conductive agent, and polyvinylidene difluoride (PVDF for short) as a binder at a mass ratio of 96: 2: 2 in an appropriate amount of N-methyl-pyrrolidone (NMP for short) solvent, and stirring thoroughly to form a homogeneous positive electrode slurry; coating a current collector aluminum foil with the slurry, and performing oven-drying, cold-pressing, cutting, and tab welding to obtain a positive electrode.

**Preparing a negative electrode**

Preparing a negative active material: Selecting natural graphite ore, and performing crushing/ball-milling and flotation on the natural graphite ore to obtain natural flake graphite. Crushing the natural flake graphite, and selecting the powder with a particle diameter $D_{V50}$ of 3 $\mu$m to 18 $\mu$m. Spheroidizing the powder to obtain an A material. Mixing well the A material with a specified amount of coating agent at a ratio of 50: 50 to 90: 10, and then placing the mixture in a high-temperature carbonization furnace. Calcining the mixture at 1150 °C for 4 hours to obtain a B material. The B material is the graphite as a negative active material used in the experiment. The coating agent is a mixture of a 50% to 90% solvent and a 10% to 50% carbon material. The solvent includes toluene, ethanol, quinoline, or ethyl ether. The carbon material includes carbon nanotubes or graphene.

Mixing the negative active material, styrene-butadiene rubber (SBR for short), and sodium carboxymethyl cellulose (MMC for short) as a thickener in a deionized water solvent at a mass ratio of 95: 2: 3, and stirring thoroughly to form a homogeneous negative electrode slurry. Applying the slurry onto a current collector copper foil that is pre-coated with a 1.5 $\mu$m-thick undercoat (carbon black), oven-drying the slurry, and performing cold-pressing, cutting, and welding on the coated negative electrode with different roll pressures.

In the embodiments and comparative embodiments of this application, the corresponding peak values and peak area values in the XRD pattern of the active material layer are adjusted by adjusting the particle diameter of the powder as well as the type and content of the coating agent.

**Preparing an electrolyte solution**

Mixing well ethylene carbonate (EC), propylene carbonate (PC), and diethyl carbonate (DEC) at a mass ratio of 1: 1: 1 in a dry argon atmosphere to form a base solvent, adding a dry lithium salt $LiPF_6$ into a base solvent, mixing the mixture well, and then adding fluoroethylene carbonate and adiponitrile, and mixing the solution well to obtain an electrolyte solution. Based on the mass of the electrolyte solution, the mass percent of the fluoroethylene carbonate is 3%, the mass percent of the adiponitrile is 2%, the mass percent of $LiPF_6$ is 12.5%, and the remainder is DEC.

**Preparing a separator**

Using a 7 $\mu$m-thick polyethylene porous polymer film as a separator.

Preparing a lithium-ion battery

Stacking the positive electrode, the separator, and the negative electrode in sequence so that the separator is located between the positive electrode and the negative electrode, and then winding the stacked structure, and putting the structure into an outer package foil. Injecting the electrolyte solution prepared above, and performing steps such as vacuum sealing, standing, chemical formation, and shaping to obtain a lithium-ion battery.

**Test Methods**

**1. X-ray powder diffraction (XRD) test**

Method for testing the (002), (101), and A crystal plane diffraction peaks (hereinafter referred to as "002 peak", "101 peak", and "A peak"): Using an X-ray powder diffractometer (XRD) (model: Bruker D8 ADVANCE) to test the negative active material layer under the following conditions: the target material is Cu K$\alpha$, the voltage/current is 40 KV/40 mA, the scanning angle range is 5° to 80°, the scanning step length is 0.00836°, and the time spent on each step length is 0.3 s, so as to obtain an XRD curve. The peak A corresponds to the diffraction angle $2\theta$ of 42.4° to 43.6°, the 002 peak corresponds to the diffraction angle $2\theta$ of 25.0° to 27.0°, and the 101 peak corresponds to the diffraction angle $2\theta$ of 43.6° to 46.6°. The $S_{002}$, $S_{101}$, and $S_A$ are the peak area values of the corresponding peaks obtained by integrating the 002 peak, the 101 peak, and the A peak, respectively.

Method for testing $S_{004}/S_{110}$: Testing the (004) plane diffraction line pattern and the (110) plane diffraction line pattern in X-ray diffraction patterns of the negative active material layer according to JB/T 4220-2011 *Determination Method of Artificial Graphite Lattice Parameters,* a machinery industry standard of the People's Republic of China. Test conditions are as follows: The source of the X-ray is CuK$\alpha$ radiation, and the CuK$\alpha$ radiation is removed by a filter or a monochromator. An operating voltage of a X-ray tube is 30 Kv to 35 Kv, and an operating current of the X-ray tube is 15 mA to 20 mA. The scanning speed of the counter is 1/4 (°)/min. The diffraction peak of the (004) plane (the (004) peak in the XRD pattern of the negative active material layer) corresponds to the diffraction angle $2\theta$ of 52° to 57°. The diffraction peak of the (110) plane (the (110) peak in the XRD pattern of the negative active material layer) corresponds to the diffraction angle $2\theta$ of 75° to 80°. The integrated peak area value of the 004 peak is denoted as $S_{004}$, and the integrated peak area value of the 110 peak is denoted as $C_{110}$, so that a $S_{004}/C_{110}$ ratio of the negative active material layer is calculated.

In this application, the peak area values of the 002 peak, the 101 peak, the A peak, the 110 peak, and the 004 peak in the XRD pattern of the negative active material layer denote the peak area values calculated based on the XRD pattern.

## 2. Measuring the particle size of the negative active material

Taking a specified amount of negative active material layer as a specimen, dissolving the specimen in an organic solvent to remove the binder and thickener, and drying the specimen to obtain negative active material powder. Taking 1 gram of the negative active material powder, dissolving the powder in water as a dispersant, ultrasonicating the solution for 5 minutes at an intensity of 53 KHz, and then injecting the mixed suspension into a Malvern 3000 test instrument. Measuring the particle diameters of each specimen for three times, and averaging out the measured values to obtain the values of $Dv_{10}$, $Dv_{50}$, and $Dv_{90}$.

## 3. Element analysis and test

Weighing out 0.5 gram of negative current collector copper foil in the blank foil region of the negative electrode to serve as a specimen. Mixing the specimen with 10 mL of $HNO_3$ solution, and dissolving the trace elements in the specimen into the solution by means of microwave digestion. Introducing the digested solution into an inductively coupled plasma optical emission spectrometer (ICP-OES) light source. Using the ICP-OES instrument to detect the content of each different element based on the characteristic radiation energy emitted during radiative transition when outer electrons of gaseous atoms in the specimen material return to a ground state from an excited state after the gaseous atoms are excited.

## 4. Testing the gravimetric capacity

(1) Preparing a button cell: using the negative active material prepared in the above embodiment to prepare a positive electrode, and assembling the prepared positive electrode, lithium sheet, separator, electrolyte solution, steel sheet, foamed nickel, and button cell case together to obtain a button cell. Leave the button cell to stand for 6 hours before testing.
(2) Test process of the button cell: Putting the assembled button cell on a LAND tester, and testing the button cell in the following process: Discharging the cell at a current of 0.05 C until a lower-limit voltage of 5 mV, discharging the cell at a constant voltage equivalent to the upper-limit voltage of 2.0 V until the current reaches 50 $\mu$A, leaving the cell to stand for 5 minutes, charging the cell at a current of 0.1 C until the upper-limit voltage of 2.0 V, leaving the cell to stand for 5 minutes, and recording the gravimetric capacity at this time as the gravimetric capacity of the negative active material.

## 5. BET test

Measuring the specific surface area by referring to GB/T 19587-2017. Taking a specified amount of negative active material layer as a specimen, and dissolving the specimen in an organic solvent to remove the binder and thickener; drying the specimen to obtain negative active material powder. A specific test process is: Weighing out 1 to 8 grams of the negative active material as a specimen and putting the specimen into a 1/2-inch long tube with a bulb (the volume of the specimen weighed out exceeds at least 1/3 of the volume of the bulb) (the caliber of the spherical bulb part is 12 mm); pre-treating the specimen at 200 °C for 2 hours, and then putting the specimen into a TriStar3030 (Micromeritics, USA) analyzer for testing; measuring the specific surface area at a liquid nitrogen temperature of 77 degrees Kelvin by using $N_2$

(purity: 99.999%) as an adsorption gas, and calculating the specific surface area by a Brunauer-Emmett-Teller (BET) method.

**6. Testing the lithium plating degree of the negative electrode plate**

Leaving a lithium-ion battery specimen to stand for 5 minutes at a temperature of 0 °C, charging the battery at a constant current of 0.7 C until the voltage reaches 4.45 V, charging the battery at a constant voltage of 4.45 V until the current drops to 0.05 C, leaving the battery to stand for 5 minutes, and then discharging the battery at a constant current of 0.5 C until a voltage of 3.0 V, and leaving the battery to stand for 5 minutes. Repeating the foregoing charging and discharging process for 10 cycles, and then fully charging the battery, disassembling the battery in a dry room, and taking photos to record the status of the negative electrode.

Determining the degree of lithium plating: The degree of lithium plating is determined based on the status of the negative electrode plate obtained by disassembling a fully charged battery. When the negative electrode plate is golden yellow on the whole and the gray area of the negative electrode plate is less than 2%, it is determined that no lithium plating occurs. When a majority of the negative electrode plate is golden yellow, but some positions of the negative electrode plate are observed as gray, and the gray area accounts for 2% to 20%, it is determined that slight lithium plating occurs. When the negative electrode plate are partly gray, but a golden yellow part can still be observed, and the gray area accounts for 20% to 60%, it is determined that lithium plating occurs. When a majority of the negative electrode plate is gray, and the gray area accounts for more than 60%, it is determined that severe lithium plating occurs.

**7. Testing the direct current resistance (DCR)**

Charging, at 25 °C, the lithium-ion battery at a constant current of 1.5 C until the voltage reaches 4.45 V, and then charging the battery at a constant voltage of 4.45 V until the current drops 0.05 C, and then leaving the battery to stand for 30 minutes. Discharging the battery at a current of 0.1 C for 10 seconds, recording the voltage value as U1, discharging the battery at a current of 1 C for 360 seconds, and recording the voltage value as U2. Repeating the charge-and-discharge steps for 5 cycles. "1 C" is a rate of current at which the lithium-ion battery is fully discharged within 1 hour.

Calculating the direct current resistance R of the lithium-ion battery cycled at 25 °C according to the following formula:

$$R = (U2 - U1)/(1\ C - 0.1\ C).$$

Testing the direct current resistance of the lithium-ion battery cycled at 0 °C. The test method is the same as the above method for testing the direct current resistance R of the lithium-ion battery cycled at 25 °C except that the operations are performed in a 0 °C environment.

Unless otherwise specified, DCR referred to herein is a direct-current resistance of the lithium-ion battery in a 10% state of charge (SOC).

**8. Electrochemical impedance spectroscopy (EIS) test**

a) Preparing a three-electrode battery and performing lithiation: The preparation method is the same as the foregoing preparation method of a lithium-ion battery. In preparing a lithium-ion battery, a copper wire is connected to the battery to serve as a reference electrode. The negative electrode is lithiated at a current of 20 μA for 6 hours. The EIS is tested after completion of the lithiation.

b) Steps of testing the EIS: Connecting the lithiated three-electrode battery to a Bio-Logic VMP3B electrochemical workstation manufactured by Bio-Logic, France, and performing the test at frequencies of 30 to 50 kHz in an amplitude of 5 mV. After data is collected, the data is analyzed by using an impedance complex-plane plot to obtain data of $R_{ct}$.

**9. Testing the cycle expansion rate of the lithium-ion battery**

Leaving a lithium-ion battery specimen to stand for 5 minutes at a 45 °C test temperature, recording the initial thicknesses (PPG0 and MMC0) of the battery, and then charging the battery at a constant current of 0.7 C until the voltage reaches 4.45 V, charging the battery at a constant voltage of 4.45 V until the current reaches 0.05 C, recording the thicknesses (PPG0 and MMC0) of the battery, leaving the battery to stand for 5 minutes, and then discharging the battery at a constant current of 0.5 C until a voltage of 3.0 V, and leaving the battery to stand for 5 minutes. Repeating the above charging and discharging process for 500 cycles. Recording the battery thickness every 50 cycles in the first 200 cycles, and recording the battery thickness every 100 cycles in the last $300^{th}$ to $500^{th}$ cycles (the thickness is recorded as $PPG_x$ and $MMC_x$, where x represents the number of cycles). Recording the residual capacity at the end of each charge-discharge cycle.

PPG test: The PPG test is performed by using a PPG pouch-type battery thickness gauge (made by Shenzhen Altomei Automation Technology Co., Ltd.) that measures the thickness automatically. The test process is: Placing the battery on a lower panel of the PPG instrument; letting the upper cover plate descend at a uniform speed during the test, measuring the battery thickness through pressure sensing, recording the measured thickness as $PPG_x$, where the subscript x corresponds to the number of cycles.

MMC test: The MMC test is performed by using micrometer instrument (made by Mitutoyo Japan, model: MDC-25SX). The battery thickness at three points ($MMCa_x$, $MMCb_x$, $MMCc_x$) on the tab of the positive electrode are measured, where the letters a, b, and c correspond to different test points, and the subscript x corresponds to the number of cycles. $MMC_x = (MMCa_x + MMCb_x + MMCc_x)/3$, and MMC rebound = $(MMC_x - MMCO)/MMC \times 100\%$.

The expansion rate of lithium-ion battery cycled at 45 °C is calculated based on the recorded battery thickness: expansion rate = $[PPG_x/(Max(MMCa_x, MMCb_x, MMCc_x)) - 1] \times 100\%$, where Max ($MMCa_x$, $MMCb_x$, $MMCc_x$) represents the maximum value among the three test points.

## 10. Testing the capacity retention rate of the battery discharged at 2 C

Leaving the lithium-ion battery to stand for 5 minutes at 2 °C, and then charging the battery at a constant current of 0.7 C until the voltage reaches 4.45 V, charging the battery at a constant voltage of 4.45 V until the current reaches 0.05 C, leaving the battery to stand for 5 minutes, then discharging the battery at a constant current of 0.5 C until a voltage of 3.0 V, and leaving the battery to stand for 5 minutes. Repeating the foregoing charging and discharging process, discharging the battery at a current of 0.1 C, recording the 0.1 C discharge capacity of the lithium-ion battery, and then discharging the battery at a current of 2 C, and recording the 2 C discharge capacity of the lithium-ion battery. Calculating the capacity retention rate of the lithium-ion battery discharged at 2 C according to the following formula:

2 C discharge capacity retention rate = (2 C discharge capacity/0.1 C discharge capacity) $\times$ 100%.

**Test Results**

Table 1

| | $S_A/S_{002}$ | $S_A$ | $S_{002}$ | $S_{101}/S_{002}$ | S101 | Gravimetric capacity (mAh/g) | Cycle expansion rate of lithium-ion battery cycled at 45 °C for 200 cycles (%) | 0 °C DCR (mΩ) |
|---|---|---|---|---|---|---|---|---|
| Embodiment 1 | 0.100 | 7000 | 70000 | 0.015 | 1050 | 360 | 1.1 | 128 |
| Embodiment 2 | 0.200 | 8000 | 40000 | 0.015 | 600 | 362 | 1.5 | 123 |
| Embodiment 3 | 0.300 | 9000 | 30000 | 0.015 | 450 | 365 | 1.7 | 116 |
| Embodiment 4 | 0.100 | 8000 | 80000 | 0.015 | 1200 | 368 | 2.2 | 126 |
| Embodiment 5 | 0.100 | 9000 | 90000 | 0.015 | 1350 | 370 | 2.7 | 108 |
| Embodiment 6 | 0.200 | 8500 | 40000 | 0.02 | 800 | 363 | 2.5 | 122 |
| Embodiment 7 | 0.200 | 9000 | 45000 | 0.015 | 675 | 364 | 2.0 | 110 |

(continued)

|  | $S_A/S_{002}$ | $S_A$ | $S_{002}$ | $S_{101}/S_{002}$ | S101 | Gravimetric capacity (mAh/g) | Cycle expansion rate of lithium-ion battery cycled at 45 °C for 200 cycles (%) | 0 °C DCR (mΩ) |
|---|---|---|---|---|---|---|---|---|
| Embodiment 8 | 0.300 | 8000 | 26667 | 0.015 | 400 | 358 | 1.5 | 105 |
| Embodiment 9 | 0.300 | 9500 | 30000 | 0.02 | 600 | 360 | 1.9 | 115 |
| Embodiment 10 | 0.100 | 7000 | 70000 | 0.035 | 2450 | 365 | 2.2 | 120 |
| Embodiment 11 | 0.200 | 8000 | 40000 | 0.035 | 1400 | 365 | 2.3 | 109 |
| Embodiment 12 | 0.300 | 9000 | 30000 | 0.035 | 1050 | 366 | 2.7 | 104 |
| Comparative Embodiment 1 | 0.500 | 8000 | 16000 | 002 | 320 | 355 | 6.2 | 135 |
| Comparative Embodiment 2 | 0.050 | 10000 | 200000 | 0.02 | 4000 | 371 | 9.7 | 132 |

Note: In all embodiments and comparative embodiments in Table 1, the full-width-at-half-maximum (FWHM) of the A peak is 0.1°, and the FWHM of the 101 peak is 0.3°; the thickness of the negative active material layer is 30 µm, and the mass of the negative active material layer per unit area is 0.003 g/cm$^2$.

As shown in Embodiments 1 to 12, when the negative active material layer satisfies $0.1 \leq S_A/S_{002} \leq 0.3$, the gravimetric capacity of the lithium-ion battery is increased significantly, and the cycle expansion rate at the end of 200 cycles and the direct-current resistance value at 0 °C are reduced significantly. The decrease in the cycle expansion rate at the end of 200 cycles indicates that the lithium-ion battery achieves improved cycle performance. The decrease in the direct-current resistance value at 0 °C indicates that the lithium-ion battery achieves improved kinetic performance. Therefore, the lithium-ion batteries in Embodiments 1 to 12 achieve improved cycle performance and kinetic performance, and a high gravimetric capacity. When the negative active material layer satisfies $7000 \leq S_A \leq 9000$ and/or $25000 \leq S_{002} \leq 90000$, the lithium-ion battery exhibits higher overall performance.

The $S_A/S_{002}$ ratio in Comparative Embodiment 1 is higher than 0.3, the gravimetric capacity of the lithium-ion battery is relatively low, the cycle expansion rate at the end of 200 cycles is relatively high, and the DCR value at 0 °C is relatively high. The $S_A/S_{002}$ ratio in Comparative Embodiment 2 is lower than 0.1, the gravimetric capacity of the lithium-ion battery is relatively high, but the cycle expansion rate at the end of 200 cycles is very high, and the DCR value at 0 °C is relatively high.

**Table 2**

| | Full-width-at-half-maximum of A peak (°) | Full-width-at-half-maximum of 101 peak (°) | $S_A$ | $S_A/S_{002}$ | H (μm) | $S_A/H$ | C (g/cm$^2$) | $10^4 \times C/H$ | Gravimetric capacity (mAh/g) | $R_{ct}$ (-mΩ) | Lithium plating degree of negative electrode plate |
|---|---|---|---|---|---|---|---|---|---|---|---|
| Embodiment 2 | 0.1 | 0.3 | 8000 | 0.2 | 30.0 | 266.7 | 0.003 | 1.0 | 362.0 | 25.5 | No lithium plating |
| Embodiment 13 | 0.3 | 0.5 | 8000 | 0.2 | 60.0 | 133.3 | 0.006 | 1.0 | 365.0 | 28.0 | No lithium plating |
| Embodiment 14 | 0.5 | 0.8 | 7000 | 0.2 | 80.0 | 87.5 | 0.01 | 1.3 | 360.0 | 38.6 | No lithium plating |
| Embodiment 15 | 0.1 | 0.3 | 9000 | 0.2 | 30.0 | 300.0 | 0.004 | 1.3 | 370.0 | 24.2 | No lithium plating |
| Embodiment 16 | 0.1 | 0.3 | 8000 | 0.2 | 60.0 | 133.3 | 0.006 | 1.0 | 370.0 | 29.3 | No lithium plating |
| Embodiment 17 | 0.1 | 0.3 | 8000 | 0.2 | 60.0 | 133.3 | 0.01 | 1.7 | 370.0 | 36.5 | No lithium plating |
| Embodiment 18 | 0.1 | 0.3 | 7000 | 0.2 | 80.0 | 87.5 | 0.01 | 1.3 | 370.0 | 43.2 | No lithium plating |
| Embodiment 19 | 0.3 | 0.5 | 9000 | 0.2 | 30.0 | 300.0 | 0.004 | 1.3 | 365.0 | 22.2 | No lithium plating |
| Embodiment 20 | 0.3 | 0.5 | 8000 | 0.2 | 60.0 | 133.3 | 0.008 | 1.3 | 365.0 | 33.6 | No lithium plating |
| Embodiment 21 | 0.3 | 0.5 | 8000 | 0.2 | 60.0 | 133.3 | 0.01 | 1.7 | 365.0 | 34.9 | No lithium plating |
| Embodiment 21 | 0.3 | 0.5 | 7000 | 0.2 | 80.0 | 87.5 | 0.01 | 1.3 | 365.0 | 42.2 | No lithium plating |
| Embodiment 23 | 0.5 | 0.8 | 9000 | 0.2 | 30.0 | 300.0 | 0.004 | 1.3 | 360.0 | 20.7 | No lithium plating |
| Embodiment 24 | 0.5 | 0.8 | 7000 | 0.2 | 80.0 | 87.5 | 0.008 | 1.0 | 360.0 | 40.5 | No lithium plating |
| Embodiment 25 | 0.5 | 0.8 | 7000 | 0.2 | 60.0 | 116.7 | 0.01 | 1.7 | 360.0 | 35.3 | No lithium plating |
| Note: The remaining paramrters in the embodiments and comparative embodiments in Table 2 are the same as those in Embodiment 2. | | | | | | | | | | | |

As shown in Table 2, if the following conditions are satisfied: the full-width-at-half-maximum (FWHM) of the A peak is 0.1° to 0.5°, the FWHM of the 101 peak is 0.3° to 0.8°, $30 \ \mu m \leq H \leq 80 \ \mu m$, $87 \leq S_A/H \leq 300$, C is 0.003 g/cm$^2$ to 0.01 g/cm$^2$, and/or $1.0 \leq 10^4 \times C/H \leq 1.7$, then the impedance of the lithium-ion battery is further reduced, the lithium plating of the negative electrode plate alleviated, the gravimetric capacity of the lithium-ion battery is increased, and the cycle performance and kinetic performance of the lithium-ion battery are further enhanced.

Table 3

| | $Dv_{10}$ (μm) | $Dv_{50}$ (μm) | $Dv_{90}$ (μm) | BET (g/cm$^2$) | $S_{004}/S_{110}$ | Content of chromium (%) | Content of niobium (%) | Content of sulfur (%) | 25 °C DCR (mΩ) | Lithium plating degree of negative electrode plate | 2 C discharge capacity retention rate (%) |
|---|---|---|---|---|---|---|---|---|---|---|---|
| Embodiment 15 | 7 | 19 | 38 | 1.5 | 26 | 0.03 | 0.010 | 0.008 | 70.1 | No lithium plating | 83.1 |
| Embodiment 26 | 1.00 | 3 | 8 | 5 | 10.0 | 0.008 | 0.005 | 0.001 | 49.71 | No lithium plating | 97.7% |
| Embodiment 27 | 1.00 | 5 | 10 | 4.7 | 11.3 | 0.009 | 0.005 | 0.002 | 50.08 | No lithium plating | 95.8% |
| Embodiment 28 | 1.00 | 7 | 12 | 4.5 | 12.5 | 0.010 | 0.006 | 0.002 | 52.18 | No lithium plating | 95.0% |
| Embodiment 29 | 3.00 | 7 | 15 | 3.9 | 13.2 | 0.012 | 0.006 | 0.002 | 52.78 | No lithium plating | 93.4% |
| Embodiment 30 | 3.00 | 7 | 18 | 3.7 | 14.3 | 0.013 | 0.006 | 0.002 | 53 | No lithium plating | 92.6% |
| Embodiment 31 | 3.00 | 18 | 26 | 3.5 | 15.4 | 0.015 | 0.006 | 0.003 | 54.64 | No lithium plating | 90.4% |
| Embodiment 32 | 7.00 | 16 | 18 | 3.3 | 15.7 | 0.015 | 0.007 | 0.003 | 57.24 | No lithium plating | 90.0% |
| Embodiment 33 | 7.00 | 16 | 22 | 3.0 | 17.5 | 0.016 | 0.007 | 0.003 | 58.21 | No lithium plating | 89.0% |
| Embodiment 34 | 7.00 | 18 | 25 | 2.9 | 18.9 | 0.017 | 0.007 | 0.004 | 58.38 | No lithium plating | 88.4% |
| Embodiment 35 | 9.00 | 16 | 25 | 2.7 | 19.4 | 0.017 | 0.008 | 0.005 | 59.02 | No lithium plating | 87.6% |
| Embodiment 36 | 9.00 | 18 | 30 | 2.5 | 21.5 | 0.018 | 0.008 | 0.005 | 64.18 | No lithium plating | 87.0% |
| Embodiment 37 | 9.00 | 28 | 35 | 2.3 | 23.5 | 0.019 | 0.009 | 0.006 | 64.4 | Slight lithium plating | 85.5% |
| Embodiment 38 | 10.00 | 16 | 25 | 2.1 | 24.2 | 0.020 | 0.009 | 0.006 | 65.5 | Slight lithium plating | 84.7% |
| Embodiment 39 | 10.00 | 18 | 35 | 2.0 | 25.0 | 0.020 | 0.009 | 0.006 | 66.9 | Slight lithium plating | 84.0% |
| Note: The remaining parameters in the embodiments and comparative embodiments in Table 3 are the same as those in Embodiment 15. | | | | | | | | | | | |

Embodiments 26 to 39 describe how the particle size distribution, the BET, and the $S_{004}/S_{110}$ ratio of the negative active material layer are related to the battery performance. As shown in Table 3, if the lithium-ion battery satisfies the following conditions: $1 \mu m \leq Dv_{10} \leq 10 \mu m$, $3 \mu m \leq D_{V50} \leq 18 \mu m$, $8 \mu m \leq Dv_{90} <\_ 35 \mu m$, the content of chromium is 0.008% to 0.02%, the content of niobium is 0.005% to 0.009%, the content of sulfur is 0.001% to 0.006%, and/or $10 \leq S_{004}/S_{110} \leq 25$, then the direct-current resistance of the lithium-ion battery at 25 °C is further reduced, the lithium plating of the negative electrode plate is alleviated, the high-rate (2 C) discharge capacity retention rate is improved, and the cycle performance and kinetic performance of the lithium-ion battery are further enhanced.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

**Claims**

1.  An electrochemical device, comprising a negative electrode, wherein the negative electrode comprises a negative current collector and a negative active material layer, the negative active material layer comprises a negative active material, and the negative active material layer satisfies $0.1 \leq S_A/S_{002} \leq 0.3$, wherein $S_A$ is a peak area value of an A peak corresponding to a diffraction angle $2\theta$ of 42.4° to 43.6° in an XRD pattern of the negative active material layer, and $S_{002}$ is a peak area value of a 002 peak in the XRD pattern of the negative active material layer.

2.  The electrochemical device according to claim 1, wherein $7000 \leq S_A \leq 9000$ and/or $25000 \leq S_{002} \leq 90000$.

3.  The electrochemical device according to claim 1, wherein a full-width-at-half-maximum of the A peak is 0.1° to 0.5°.

4.  The electrochemical device according to claim 1, wherein, in the XRD pattern of the negative active material layer, a 101 peak is exhibited corresponding to the diffraction angle $2\theta$ of 43.6° to 46.6°, satisfying: $0.015 \leq S_{101}/S_{002} \leq 0.035$, wherein $S_{101}$ is a peak area value of the 101 peak; and/or a full-width-at-half-maximum of the 101 peak is 0.3° to 0.8°.

5.  The electrochemical device according to claim 1, wherein the negative electrode satisfies at least one of conditions (a) to (d):

    (a) the negative current collector is a copper foil;
    (b) the negative current collector comprises chromium, and, based on a mass of the negative current collector, a content of the chromium is 0.008% to 0.020%;
    (c) the negative current collector comprises niobium, and, based on a mass of the negative current collector, a content of the niobium is 0.005% to 0.009%; or
    (d) the negative current collector comprises sulfur, and, based on a mass of the negative current collector, a content of the sulfur is 0.001% to 0.006%.

6.  The electrochemical device according to claim 1, wherein a thickness of the negative active material layer is H $\mu$m, wherein $87 \leq S_A/H \leq 300$.

7.  The electrochemical device according to claim 1, wherein a thickness of the negative active material layer is H $\mu$m, and a mass of the negative active material layer per unit area is C $g/cm^2$, satisfying: $0.003 \leq C \leq 0.01$, and $1.0 \leq 10^4 \times C/H \leq 1.7$.

8.  The electrochemical device according to claim 1, wherein the negative active material layer satisfies $10 \leq S_{004}/S_{110} \leq 25$, wherein $S_{004}$ is a peak area value of a 004 peak in the XRD pattern of the negative active material layer, and $S_{110}$ is a peak area value of a 110 peak in the XRD pattern of the negative active material layer.

9.  The electrochemical device according to claim 1, wherein the negative electrode satisfies at least one of conditions (e) to (h):

    (e) the negative active material comprises natural graphite;
    (f) a specific surface area of the negative active material is 2 $g/cm^2$ to 5 $g/cm^2$;
    (g) a gravimetric capacity of the negative active material is 360 mAh/g to 370 mAh/g; or
    (h) a particle diameter of the negative active material satisfies $1 \mu m \leq Dv_{10} \leq 10 \mu m$, $3 \mu m \leq Dv_{50} \leq 18 \mu m$, and 8

$\mu m \le Dv_{90} \le 35 \ \mu m$.

**10.** An electronic device, comprising the electrochemical device according to any one of claims 1 to 9.

## INTERNATIONAL SEARCH REPORT

| International application No. |
|---|
| **PCT/CN2022/083355** |

**A. CLASSIFICATION OF SUBJECT MATTER**

H01M4/587(2010.01)i;H01M10/0525(2010.01)i;H01M10/058(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

ENTXT, CNTXT, CNABS, CNKI, VEN, ENTXTC: 峰面积, 强度, XRD, X射线, X-ray, 厚度, "43.6", "42.4", "002", 负极, 阳极, 石墨, Peak area, intensity, XRD, X-ray, thickness, negative electrode, anode, graphite

**C. DOCUMENTS CONSIDERED TO BE RELEVANT**

| Category* | Citation of document, with indication, where appropriate, of the relevant passages | Relevant to claim No. |
|---|---|---|
| A | CN 111384395 A (NINGDE AMPEREX TECHNOLOGY LTD.) 07 July 2020 (2020-07-07) entire document | 1-10 |
| A | JP 2002164051 A (TOSHIBA CORP.) 07 June 2002 (2002-06-07) entire document | 1-10 |
| A | JP 2001110415 A (PETOCA LTD.) 20 April 2001 (2001-04-20) entire document | 1-10 |
| A | CN 110416551 A (SAMSUNG SDI CO., LTD.) 05 November 2019 (2019-11-05) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 March 2023** | **03 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<table>
<tr><td colspan="2" align="center"><b>INTERNATIONAL SEARCH REPORT</b><br><b>Information on patent family members</b></td><td>International application No.<br><br><b>PCT/CN2022/083355</b></td></tr>
</table>

| Patent document cited in search report | | | Publication date (day/month/year) | Patent family member(s) | | | Publication date (day/month/year) |
|---|---|---|---|---|---|---|---|
| CN | 111384395 | A | 07 July 2020 | WO | 2021184531 | A1 | 23 September 2021 |
| | | | | CN | 111384395 | B | 29 June 2021 |
| JP | 2002164051 | A | 07 June 2002 | JP | 3840087 | B2 | 01 November 2006 |
| JP | 2001110415 | A | 20 April 2001 | | None | | |
| CN | 110416551 | A | 05 November 2019 | KR | 20220100825 | A | 18 July 2022 |
| | | | | KR | 20190125114 | A | 06 November 2019 |
| | | | | KR | 102417773 | B1 | 05 July 2022 |
| | | | | US | 2022029153 | A1 | 27 January 2022 |
| | | | | US | 2019334161 | A1 | 31 October 2019 |
| | | | | US | 11152607 | B2 | 19 October 2021 |
| | | | | EP | 3561914 | A1 | 30 October 2019 |

Form PCT/ISA/210 (patent family annex) (July 2022)